(19) **Europäisches Patentamt European Patent Office Office européen des brevets**

(11) **EP 4 010 438 B1**

(12) **EUROPEAN PATENT SPECIFICATION**

(45) Date of publication and mention of the grant of the patent:
**02.10.2024   Bulletin 2024/40**

(21) Application number: **20761404.1**

(22) Date of filing: **07.08.2020**

(51) International Patent Classification (IPC):
*C09D 7/40* *(2018.01)*

(52) Cooperative Patent Classification (CPC):
**C09D 7/70**

(86) International application number:
**PCT/US2020/045430**

(87) International publication number:
**WO 2021/030197 (18.02.2021 Gazette 2021/07)**

(54) **COATING COMPOSITIONS, LAYERS, AND SYSTEMS FOR RADAR TRANSMISSION AND METHODS FOR MAKING AND USING THE SAME**

BESCHICHTUNGSZUSAMMENSETZUNGEN, SCHICHTEN UND SYSTEME ZUR RADARÜBERTRAGUNG SOWIE VERFAHREN ZU IHRER HERSTELLUNG UND VERWENDUNG

COMPOSITIONS, COUCHES ET SYSTÈMES DE REVÊTEMENT POUR TRANSMISSION RADAR ET LEURS PROCÉDÉS DE FABRICATION ET D'UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.08.2019   US 201916536655**

(43) Date of publication of application:
**15.06.2022   Bulletin 2022/24**

(73) Proprietor: **PPG Industries Ohio, Inc.**
**Cleveland, OH 44111 (US)**

(72) Inventors:
• **DECKER, Eldon L.**
  **Gibsonia, Pennsylvania 15044 (US)**
• **LEWIS, Jason R.**
  **Monaca, Pennsylvania 15061 (US)**
• **BROWN, Zachary J.**
  **Pittsburgh, Pennsylvania 15206 (US)**
• **HORDIJK, David M.**
  **Mars, Pennsylvania 16046 (US)**
• **MUNRO, Calum H.**
  **Wexford, Pennsylvania 15090 (US)**

(74) Representative: **f & e patent**
  **Braunsberger Feld 29**
  **51429 Bergisch Gladbach (DE)**

(56) References cited:
WO-A1-00/15351        WO-A1-2017/127708
WO-A1-2020/099151     DE-A1- 102005 061 684
US-A1- 2010 047 620

**Description**

**CROSS-REFERENCE**

This application claims priority to U.S. Patent Application No. 16/536,655, which was filed on August 9, 2019.

**FIELD**

The present disclosure relates to a radar transmissive ("RT") coating compositions, layers, and systems and methods for making and using the same.

**BACKGROUND**

Autonomous vehicles use various sensor systems, such as cameras, radar, and LIDAR (Light Detection, and Ranging), to detect and locate obstacles in order to safely navigate through an environment. Typically, a radar system includes a transmitter to emit radar waves and a receiver to receive radar waves reflected by the obstacle. Radar waves can be electromagnetic radiation comprising a frequency in a range of 1 GHz to 100 GHz. Some surfaces may present detection challenges for some radar systems.

Compositions comprising a film-forming resin as well as electrically conductive particles and/or radar transmissive pigments are described in WO 2017/127708 A1, US 2010/0047620 A1, DE 10 2005 061 684 A1, and WO 00/15351 A1.

**SUMMARY**

The present disclosure provides a coating composition according to claim 1. The coating composition comprises a film-forming resin and 1% to 25% of a flake pigment composition, based on the total weight of the coating composition. The flake pigment composition comprises 50% or greater by weight radar transmissive pigment based on the total weight of the pigment composition and no greater than 50% by weight electrically conductive pigment based on the total weight of the pigment composition. The radar transmissive pigment comprises mica pigment, oxide coated mica pigment, glass flake, oxide coated glass flake, visible light diffractive pigment, visible light reflective organic pigment, metal oxide platelets, or a combination thereof. The pigment composition comprises 0.065% to 50% by weight aluminum flake based on the total weight of the pigment composition. When the coating composition is applied over a thermoplastic polyolefin ("TPO") substrate and cured at a dry film thickness of $20\mu m$ to form a coating system, the coating system transmits 70% or greater of electromagnetic radiation comprising a frequency of 1 GHz to 100 GHz through the coating system. The coating system has a flop index of 5 or greater, wherein flop index = $2.69 (L_1-L_3)^{1.11} / (L_2)^{0.86}$, and wherein $L_1$ is a CIELAB (color space specified by the International Commission on Illumination) L* value as measured at 15°, using a multi-angle spectrophotometer with D65 Illumination and 10° observer, $L_2$ is a CIELAB L* as measured at 45°, using a multi-angle spectrophotometer with D65 Illumination and 10° observer, and $L_3$ is a CIELAB L* value as measured at 110°, using a multi-angle spectrophotometer with D65 Illumination and 10° observer. The coating system has a CIELAB $\Delta E$ of 4 or less compared to a color-matched coating system, as measured at 110°, using a multi-angle spectrophotometer with D65 Illumination and 10° observer.

The present disclosure also provides a coating layer formed by the coating composition.

The present disclosure also provides a coating system comprising the coating layer applied over a radar transmissive substrate.

The present disclosure also provides a method according to claim 11 for making the coating system.

The present disclosure also provides a method according to claim 13 for making the coating composition. The method comprises combining the film-forming resin and the flake pigment composition to form the coating composition.

It is understood that the inventions described in this specification are not limited to the examples summarized in this Summary. Various other aspects are described and exemplified herein.

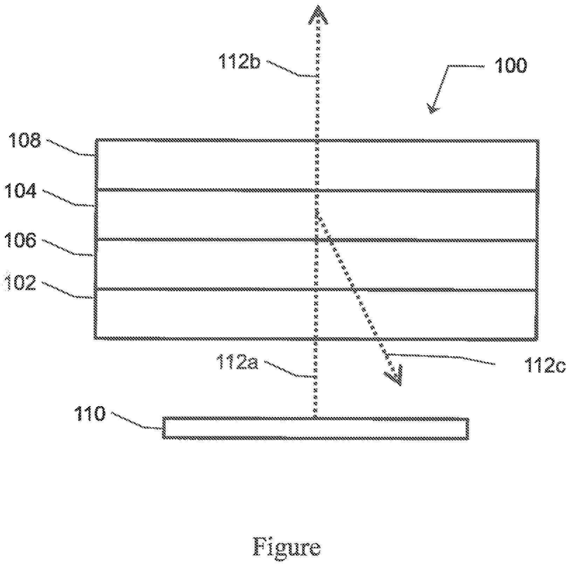

**BRIEF DESCRIPTION OF THE DRAWING**

The features and advantages of the examples, and the manner of attaining them, will become more apparent, and the examples will be better understood by reference to the following description of examples taken in conjunction with the accompanying drawing, wherein:

The Figure is a schematic representation of an article comprising an example of a coating system according to the present disclosure.

Corresponding reference characters indicate corresponding parts throughout the several views. The exemplifications set out herein illustrate certain examples, in one form, and such exemplifications are not to be construed as limiting the scope of the examples in any manner.

## DETAILED DESCRIPTION

Certain exemplary aspects of the present disclosure will now be described to provide an overall understanding of the principles of the composition, function, manufacture, and use of the compositions and methods disclosed herein. An example or examples of these aspects are illustrated in the accompanying drawing. Those of ordinary skill in the art will understand that the compositions, articles, and methods specifically described herein and illustrated in the accompanying drawing are non-limiting exemplary aspects and that the scope of the various examples of the present invention is defined solely by the claims. The features illustrated or described in connection with one exemplary aspect may be combined with the features of other aspects. Such modifications and variations are intended to be included within the scope of the present invention.

Reference throughout the specification to "various examples," "some examples," "one example," "an example," or the like, means that a particular feature, structure, or characteristic described in connection with the example is included in an example. Thus, appearances of the phrases "in various examples," "in some examples," "in one example," "in an example," or the like, in places throughout the specification are not necessarily all referring to the same example. Furthermore, the particular features, structures, or characteristics may be combined in any suitable manner in an example or examples. Thus, the particular features, structures, or characteristics illustrated or described in connection with one example may be combined, in whole or in part, with the features, structures, or characteristics of another example or other examples without limitation. Such modifications and variations are intended to be included within the scope of the present examples.

As used in this specification, particularly in connection with coating layers or films, the terms "on," "onto," "over," and variants thereof (e.g., "applied over," "formed over," "deposited over," "provided over," "located over," and the like) mean applied, formed, deposited, provided, or otherwise located over a surface of a substrate but not necessarily in contact with the surface of the substrate. For example, a coating layer "applied over" a substrate does not preclude the presence of another coating layer or other coating layers of the same or different composition located between the applied coating layer and the substrate. Likewise, a second coating layer "applied over" a first coating layer does not preclude the presence of another coating layer or other coating layers of the same or different composition located between the applied second coating layer and the applied first coating layer.

As used in this specification, the terms "polymer" and "polymeric" means prepolymers, oligomers, and both homopolymers and copolymers. As used in this specification, "prepolymer" means a polymer precursor capable of further reactions or polymerization by a reactive group or reactive groups to form a higher molecular mass or crosslinked state.

As used in this specification, the terms "cure" and "curing" refer to the chemical crosslinking of components in a coating composition applied as a coating layer over a substrate. Accordingly, the terms "cure" and "curing" do not encompass solely physical drying of coating compositions through solvent or carrier evaporation. In this regard, the term "cured," as used in this specification, refers to the condition of a coating layer in which a component of the coating composition forming the layer has chemically reacted to form new covalent bonds in the coating layer (e.g., new covalent bonds formed between a binder resin and a curing agent).

As used herein, the term "flop index" is defined according to "Observation and Measurement of the Appearance of Metallic Materials - Part 1- Macro Appearance", C. S. McCamy, Color Research And Application, Volume 21, Number 4, August 1996, Pages 292-304. Namely, the flop index is defined according to Equation 1, set forth below.

$$\text{Equation 1}$$

$$\text{Flop Index} = 2.69\,(L_1\text{-}L_3)^{1.11} / (L_2)^{0.86}$$

wherein:

$L_1$ is CIELAB L* measured at the aspecular angle of 15°
$L_2$ is CIELAB L* measured at the aspecular angle of 45°, and
$L_3$ is CIELAB L* measured at the aspecular angle of 110°.

As used herein the term "silver" includes neutral or gray colors, as well as chromatic colors, such as slightly to significantly violet, blue, green, yellow, orange, red or a color of any hue (CIE hue value between 0° and 360°) that also exhibit a metallic appearance as defined by a flop index of 2 or greater.

Typically, a radar system can be mounted behind a coated bumper cover of a vehicle and can emit and receive radar waves via the coated bumper cover. The coating on the bumper cover can provide a desirable aesthetic appearance. However, the coating may cause transmission loss of radar waves, which can affect the performance of the radar system. Thus, an RT coating system and a method for making and using the same are provided. The RT coating system comprises a flop index of 5 or greater and 70% or greater radar transmission. The RT coating system comprises a RT coating layer, which comprises a film-forming resin and a pigment composition.

The RT coating layer 104 can be applied from a RT coating composition formulated with a liquid viscosity suitable for atomization and droplet formation under the high-shear conditions associated with single or multiple component airless spray application techniques at a temperature of -10°C or greater, such as, a temperature of 0°C or greater, a temperature of 10°C or greater, a temperature of 30°C or greater, a temperature of 40°C or greater, or a temperature of 50°C or greater. The RT coating composition can be formulated with a liquid viscosity suitable for atomization and droplet formation under the high-shear conditions associated with single or multiple component airless spray application techniques at a temperature of 60°C or lower, such as, 50°C or lower, 40°C or lower, 30°C or lower, 10°C or lower, or 0°C or lower. The RT coating composition can be formulated with a liquid viscosity suitable for atomization and droplet formation under the high-shear conditions associated with single or multiple component airless spray application techniques in a temperature range of -10°C to 60°C, such as, -10°C to 50°C, -10°C to 40°C, -10°C to 30°C, or 10°C to 40°C.

The RT coating layer 104 can comprise a pigment composition suitable to provide a metallic appearance, such as a silver color, to the RT coating system 100. The RT coating system 100 comprises a flop index of 5 or greater, such as, for example 10 or greater, 15 or greater, or 20 or greater. The RT coating system 100 can comprise a flop index of 30 or lower, such as, for example, 20 or lower, 15 or lower, 10 or lower, or 5. The RT coating system 100 can comprise a flop index in a range of 5 to 30, such as, for example 10 to 30, 15 to 30, 5 to 20, 10 to 20, or 15 to 20.

The RT coating composition comprises 1% or greater by weight pigment composition based on the total weight of the RT coating composition, such as, 5% or greater by weight pigment composition, 8% or greater by weight pigment composition, 9% or greater by weight pigment composition, 10% or greater by weight pigment composition, 12% or greater by weight pigment composition, 15% or greater by weight pigment composition, or 20% or greater by weight pigment composition, all based on the total weight of the RT coating composition. The RT coating composition comprises 25% or lower by weight pigment composition based on the total weight of the RT coating composition, such as, 20% or lower by weight pigment composition, 15% or lower by weight pigment composition, 12% or lower by weight pigment composition, 10% or lower by weight pigment composition, 9% or lower by weight pigment composition, 8% or lower by weight pigment composition, or 5% or lower by weight pigment composition, all based on the total weight of the RT coating composition. The RT coating composition comprises a range of 1% to 25% by weight pigment composition based on the total weight of the RT coating composition, such as, 1% to 15% by weight pigment composition, 5% to 15% by weight pigment composition, 8% to 12% by weight pigment composition, 9% to 12% by weight pigment composition, 10% to 12% by weight pigment composition, or 5% to 20% by weight pigment composition, all based on the total weight of the RT coating composition.

The pigment composition comprises a mixture of different pigments. The pigment composition comprises a radar transmissive pigment and, electrically conductive flake pigment, namely aluminum flake. Additionally, the pigment can comprise, for example, carbazole dioxazine crude pigment, azo, monoazo, disazo, naphthol AS, salt type (lakes), benzimidazolone, condensation, metal complex, isoindolinone, isoindoline and polycyclic phthalocyanine, quinacridone, perylene, perinone, diketopyrrolo pyrrole, thioindigo, anthraquinone, indanthrone, anthrapyrimidine, flavanthrone, pyranthrone, anthanthrone, dioxazine, triarylcarbonium, quinophthalone pigments, diketo pyrrolo pyrrole red, titanium dioxide, carbon black, and combinations of any thereof. The pigment can comprise, for example, a finely divided solid powder that is insoluble but wettable under the conditions of use. The pigment can be organic or inorganic and can be agglomerated or non-agglomerated. The pigment can be incorporated into the RT coating composition by grinding or simple mixing. The pigment can be incorporated by grinding into the coating composition by use of a grind vehicle, such as an acrylic grind vehicle. The pigment can be a flake pigment or other suitable shape.

The pigment composition can affect the color of the RT coating system 100 and/or the radar transmission of the RT coating system 100. The pigment composition comprises 50% or greater by weight radar transmissive pigment based on the total weight of the pigment composition, such as, 55% or greater by weight radar transmissive pigment, 58% or greater by weight radar transmissive pigment, 60% or greater by weight radar transmissive pigment, 70% or greater by weight radar transmissive pigment, 80% or greater by weight radar transmissive pigment, 90% or greater by weight radar transmissive pigment, or 99% or greater by weight radar transmissive pigment, all based on the total weight of the pigment composition. The pigment composition can comprise 100% or lower by weight radar transmissive pigment based on the total weight of the pigment composition, such as, 99% or lower by weight radar transmissive pigment, 90% or lower by weight radar transmissive pigment, 80% or lower by weight radar transmissive pigment, 70% or lower by weight radar transmissive pigment, 60% or lower by weight radar transmissive pigment, or 55% or lower by weight radar transmissive pigment, all based on the total weight of the pigment composition. The pigment composition can comprise 50% to 100% by weight radar transmissive pigment based on the total weight of the composition, such as, 50% to 90% by weight radar transmissive pigment, 55% to 100% by weight radar transmissive pigment, 55% to 90% by weight radar transmissive pigment, 55% to 80% by weight radar transmissive pigment, 55% to 70% by weight radar transmissive pigment, 55% to 60% by weight radar transmissive pigment, 60% to 100% by weight radar transmissive pigment, 70% to 100% by weight radar transmissive pigment, or 80% to 90% by weight radar transmissive pigment, all based on the total weight of the pigment composition. The pigment composition can consist essentially of radar transmissive pigment.

The radar transmissive pigment comprises mica pigment, oxide coated mica pigment, glass flake, oxide coated glass flake, visible light diffractive pigment, visible light reflective organic pigment, metal oxide platelets, or a combination thereof. For example, the visible light diffractive pigment can comprise ordered arrays of particles in a polymeric matrix, such as, for example, the color effect pigments described in U.S. Patent No. 6,894,086 to Munro et al. and the colorant described in U.S. Patent No. 8,133,938 to Munro et al. The visible light reflective organic pigment can comprise polymeric layers, such as, for example, the pigments described in U.S. Patent No. 6,299,979 to Neubauer et al.. The metal oxide platelets can be, for example, aluminum oxide and titanium oxide. The radar transmissive pigment can be electrically non-conductive.

The pigment composition can comprise 50% or lower by weight electrically conductive pigment based on the total weight of the pigment composition, such as, 45% or lower by weight electrically conductive pigment, 42% or lower by weight electrically conductive pigment, 40% or lower by weight electrically conductive pigment, 30% or lower by weight electrically conductive pigment, 20% or lower by weight electrically conductive pigment, 10% or lower by weight electrically conductive pigment, 5% or lower by weight electrically conductive pigment, or 2% or lower by weight electrically conductive pigment, all based on the total weight of the pigment composition. The pigment composition can comprise 1% or greater by weight electrically conductive pigment based on the total weight of the pigment composition, such as, 2% or greater by weight electrically conductive pigment, 5% or greater by weight electrically conductive pigment, 10% or greater by weight electrically conductive pigment, 20% or greater by weight electrically conductive pigment, 30% or greater by weight electrically conductive pigment, 40% or greater by weight electrically conductive pigment, or 45% or greater by weight electrically conductive pigment, all based on the total weight of the pigment composition. The pigment composition can comprise 1% to 50% by weight electrically conductive pigment based on the total weight of the pigment composition, such as, 1% to 5% by weight electrically conductive pigment, 5% to 45% by weight electrically conductive pigment, 5% to 30% by weight electrically conductive pigment, 10% to 40% by weight electrically conductive pigment, or 30% to 50% by weight electrically conductive pigment, all based on the total weight of the pigment composition.

In addition to aluminum flake, the electrically conductive pigment can comprise electrically conductive material or comprise a dielectric substrate and an electrically conductive layer surrounding the dielectric substrate. The additional electrically conductive pigment can be, for example, steel flake, copper flake, silver particles, conductive carbon pigments, or a combination thereof.

The pigment composition comprises 50% or lower by weight aluminum flake based on the total weight of the pigment composition, such as, 45% or lower by weight aluminum flake, 42% or lower by weight aluminum flake, 40% or lower by weight aluminum flake, 30% or lower by weight aluminum flake, 20% or lower by weight aluminum flake, 11% or lower by weight aluminum flake, 10% or lower by weight aluminum flake, 5% or lower by weight aluminum flake, or 1% or lower by weight aluminum flake, all based on the total weight of the pigment composition. The pigment composition comprises 0.065% or greater by weight aluminum flake based on the total weight of the pigment composition, such as, 1% or greater by weight aluminum flake, 5% or greater by weight aluminum flake, 10% or greater by weight aluminum flake, 20% or greater by weight aluminum flake, 30% or greater by weight aluminum flake, 40% or greater by weight aluminum flake, or 45% or greater by weight aluminum flake, all based on the total weight of the pigment composition. The pigment composition comprises 0.065% to 50% by weight aluminum flake based on the total weight of the pigment composition, such as, 0.065% to 11% by weight aluminum flake, 1% to 5% by weight aluminum flake, 5% to 45% by weight aluminum flake, 5% to 30% by weight aluminum flake, 10% to 40% by weight aluminum flake, or 30% to 50% by weight aluminum flake, all based on the total weight of the pigment composition. The aluminum flake can comprise Aluminum Paste 634A from Toyal Aluminum K.K. and/or TSB 2044A Aluminum Paste from Toyal America. Minimizing the aluminum flake in the pigment composition can enable higher radar transmission by the RT coating layer.

As used herein, "average particle size" refers to the z-average size measured using dynamic light scattering, which is the intensity-weighted harmonic mean particle diameter (e.g., $D_{50}$). Average particle size for pigments except flakes according to the present disclosure as reported herein were measured according to ISO-22412. Average particle size according to the present disclosure for a flake such as aluminum flake as reported herein were measured according to column 10 line 35 to column 11 line 12 of U.S. Patent No. 8,999,054. As used herein, "average particle size" when referring to a flake is used interchangeably with "mean particle size".

The pigment used in the pigment composition can comprise an average particle size of 1 $\mu$m or greater, such as, 10 $\mu$m or greater, 20 $\mu$m or greater, 30 $\mu$m or greater, 40 $\mu$m or greater, 50 $\mu$m or greater, 60 $\mu$m or greater, 70 $\mu$m or greater, 80 $\mu$m or greater, or 90 $\mu$m or greater. The pigment composition can comprise an average particle size of 100 $\mu$m or lower, such as, 90 $\mu$m or lower, 80 $\mu$m or lower, 70 $\mu$m or lower, 60 $\mu$m or lower, 50 $\mu$m or lower, 40 $\mu$m or lower, 30 $\mu$m or lower, 20 $\mu$m or lower, or 10 $\mu$m or lower. The pigment used in the pigment composition can comprise an average particle size in a range of 1 μm to 100 μm, such as, 1 μm to 20 μm, 1 μm to 40 μm, 10 μm to 100 μm, 20 μm to 100 μm, 30 μm to 100 μm, 10 μm to 90 μm, 10 μm to 70 μm, 10 μm to 50 μm, 10 μm to 60 μm, 30 μm to 70 μm, or 40 μm to 60 μm.

As illustrated in the Figure, an RT coating system 100 comprising an RT coating layer 104 is provided. The RT coating layer 104 can be applied to a substrate 102 and the RT coating layer 104 can be suitable for the transmission of radio waves throughout the RT coating layer 104. The substrate 102 can be a radar transmissive substrate (e.g., allow transmission of electromagnetic radiation in a wavelength range of 1 GHz to 100 GHz with minimal, if any, absorption, scattering, or reflection through the substrate) such as a non-metallic substrate. Non-metallic substrates may include polymeric, such as plastic, including polyester, polyolefin, polyamide, cellulosic, polystyrene, polyacrylic, poly(ethylene naphthalate), polypropylene, polyethylene, nylon, ethylene vinyl alcohol, polylactic acid, other "green" polymeric substrates, poly(ethyleneterephthalate), polycarbonate, polycarbonate acrylobutadiene styrene, or polyamide. The substrate 102 can comprise at least a portion of a vehicle component. A vehicle component as described herein means a portion of a machine capable of transporting people and/or cargo (e.g., an automobile, a truck, a bus, a motorcycle, a train, a watercraft, an aircraft, a spacecraft). For example, a vehicle component can comprise a bumper cover, a fender, a hood, a trunk, a door, or a mirror housing.

The substrate 102 can be at least partially coated with the RT coating layer 104. For example, the RT coating layer 104 can be applied to 5% or greater of an exterior surface area of the substrate 102, such as, 10% or greater, 20% or greater, 50% or greater, 70% or greater, 90% or greater, or 99% or greater of an exterior surface area of the substrate 102. The RT coating layer 104 can be applied to 100% or lower of an exterior surface area of the substrate 102, such as, 99% or lower, 90% or lower, 70% or lower, 50% or lower, 20% or lower, or 10% or lower of an exterior surface area of the substrate 102. The RT coating layer 104 can be applied to 5% to 100% of an exterior surface area of the substrate 102, such as, 5% to 99%, 5% to 90%, 5% to 70%, or 50% to 100% of an exterior surface area of the substrate 102. For example, the RT coating layer 104 may be a decorative coating.

The dry film thickness of the RT coating layer 104 can be 0.2 μm or greater, such as, 0.25 μm or greater, 2 μm or greater, 10 μm or greater, 20 μm or greater, 25 μm or greater, 50 μm or greater, or 130 μm or greater. The dry film thickness of the RT coating layer 104 can be 500 μm or less, such as, 130 μm or less, 50 μm or less, 25 μm or less, 20 μm or less, 10 μm or less, 2 μm or less, or 0.25 μm or less. The dry film thickness of the RT coating layer 104 can be in a range of 0.2 μm to 500 μm, such as, 5 μm to 100 μm, 0.25 μm to 130 μm, 2 μm to 50 μm, or 10 μm to 25 μm.

The RT coating layer 104 may be formed from a single layer or from a multilayer coating stack, such as a multilayer coating stack including at least two RT coating layers, a first RT coating layer and a second RT coating layer underneath at least a portion of the first RT coating layer. The RT coating system 100 can comprise additional layers, such as, a topcoat (e.g., clearcoat) 108, a primer layer 106, and combinations thereof. The RT coating layer 104 can be applied, for example, directly on the substrate 102, over the primer layer 106, or other underlying layer. The topcoat 108 can be applied directly onto the RT coating layer 104 or over another underlying layer (not shown).

The RT coating layer 104 can be applied from a RT coating composition that can be formulated as a solvent-based composition, a water-based composition, or a 100% solid composition that does not comprise a volatile solvent or aqueous carrier. The RT coating composition can be a liquid at a temperature of -10°C or greater, such as, 0°C or greater, 10°C or greater, 30°C or greater, 40°C or greater, or 50°C or greater. The RT coating composition can be a liquid at a temperature of 60°C or lower, such as, 50°C or lower, 40°C or lower, 30°C or lower, 10°C or lower, or 0°C or lower. The RT coating composition can be a liquid at a temperature in a range of -10°C to 60°C, such as, -10°C to 50°C, -10°C to 40°C, -10°C to 30°C, or 0°C to 40°C. The RT coating composition can be a liquid at room temperature.

Referring to the Figure, a radar system 110 may be positioned proximal to and/or adjacent to the RT coating system 100. The radar system 110 can transmit radio waves 112a that can traverse through the RT coating layer 104 and, if present, the substrate 102, the primer layer 106, and/or the topcoat 108. However, the RT coating system 100 can reduce a portion of the transmission of the radio waves 112a, and the remaining radio waves 112b can exit the RT coating system 100. For example, the transmission of radio waves 112a through the RT coating system 100 can be reduced by reflection (e.g., as reflected radio waves 112c), absorption, and/or scattering. The remaining radio waves 112b can be used for the detection of an object (not shown). For example, the remaining radio waves 112b can reflect off of the object and return through the RT coating system 100 and be detected by the radar system 110. Additionally, the thickness of the RT coating layer 104 can affect the reduction in the transmission of the radio waves 112a. For example, the thicker the RT coating layer 104, the more reflection, absorption, and/or scattering that may occur as the radio waves 112a traverse through the thickness of the RT coating layer 104. Similarly, the thinner the RT coating layer 103, the less reflection, absorption, and/or scattering that may occur as the radio waves 112a traverse through the thickness of the RT coating layer 104.

Radar signal transmission of the RT coating system 100 can be defined as the percent of the radio waves 112a that are transmitted through the RT coating system 100 and exit the RT coating system 100 as remaining radio waves 112b. As used herein, "radar signal transmission" is measured by measuring insertion loss according to standard test method CTG-TM-0100-2018, available at: https://compasstech.com/wp-content/uploads/20 18/06/CTG-Focused-Beam-Mesurement-System-Standard.pdf, and converting the insertion loss to radar signal transmission using Equation 2. The insertion loss can be measured by passing radio waves through a thermoplastic polyolefin ("TPO") panel coated with the coating layer, and optionally, an adhesion promoter and a clearcoat. Radar signal transmission can be measured in a frequency range of 1 GHz to 100 GHz. The radar signal transmission can be measured at a frequency of 24 GHz and/or 77 GHz.

Equation 2

$$\% \, Transmission = 100 \times 10^{Insertion \, Loss/10}$$

The RT coating layer 104 and/or RT coating system 100 can be configured to transmit an amount of electromagnetic radiation comprising a frequency of 1 GHz to 100 GHz through the RT coating layer 104 and/or RT coating system 100 of 70% or greater, such as, 75% or greater, 80% or greater, 85% or greater, 90% or greater, 95% or greater, or 99% or greater, all as measured according to standard test method CTG-TM-0100-2018. The RT coating layer 104 and/or RT coating system 100 can be configured to transmit an amount of electromagnetic radiation comprising a frequency of 1 GHz to 100 GHz through the RT coating layer 104 and/or RT coating system 100 of 100% or lower, such as, 99% or lower, 95% or lower, 90% or lower, 85% or lower, 80% or lower, or 75% or lower, all as measured according to standard test method CTG-TM-0100-2018. The RT coating layer 104 and/or RT coating system 100 can be configured to transmit an amount of electromagnetic radiation comprising a frequency of 1 GHz to 100 GHz through the RT coating layer 104 and/or RT coating system 100 in a range of 70% to 100%, such as, 80% to 100%, 70% to 90%, 80% to 90%, or 90% to 100%, all as measured according to standard test method CTG-TM-0100-2018. For example, configuring the RT coating layer 104 and/or RT coating system 100 to transmit a desired amount of electromagnetic radiation comprising a frequency of 1 GHz to 100 GHz can comprise reducing the amount of pigments in the RT coating layer 104 and/or RT coating system 100 which reflect, absorb, and/or scatter electromagnetic radiation comprising a frequency of 1 GHz to 100 GHz.

The area coverage of flake pigments in the RT coating layer 104 can affect the color of and the radar transmission of the RT coating system 100. It may be desirable to optimize the area coverage of flake pigments in the RT coating layer 104.

As used herein, the phrase "area coverage" is a two dimensional measure of an area occupied by a component in a coating layer where the coating layer is observed/measured from a position above and perpendicular to the plane of the surface of the coating layer, projecting the three-dimensional view of the coating layer into two dimensions (X, Y) and the area occupied by the component is compared to the total two dimensional area occupied by the coating layer.

As used herein, the term "flake pigment" means pigment that is flake shaped, where the ratio of the width of the pigment to the thickness of the pigment (termed aspect ratio) is at least 5, such as, for example, at least 6, at least 10, at least 100, at least 200, at least 500, or at least 1,000. The aspect ratio of flake pigment can be less than 2,000, such as, for example, less than 1,000, less than 500, less than 200, less than 100, less than 10, or less than 6. The aspect ratio of the flake pigment can be in the range of 5 to 2,000, such as, for example, 5 to 1000, 10 to 2,000, 10 to 200, or 20 to 500. Flake pigment can comprise a thickness of less than 10 microns as measured by scanning electron microscopy (SEM) or by transmission electron microscopy (TEM), such as, for example, less than 5 microns, less than 0.5 microns, or less than 0.05 microns all measured by SEM or by TEM. Flake pigment can comprise a thickness greater than 0.05 microns as measured by SEM or by TEM, such as, for example, greater than 0.5 microns, greater than 5 microns, or greater than 10 microns all measured by SEM or by TEM. Flake pigment can comprise a thickness in a range of 0.05 microns to 10 microns as measured by SEM or by TEM, such as, for example, 0.5 to 5 microns as measured by SEM or by TEM. Flake pigment can comprise a width of less than 150 microns as measured by optical microscopy, by SEM, or by TEM, such as, for example, less than 30 microns, less than 20 microns, less than 10 microns, less than 5 microns, or less than 2 microns all measured by optical microscopy, by SEM, or by TEM. Flake pigment can comprise a width of greater than 1 micron as measured by optical microscopy or by SEM or by TEM, such as, for example, greater than 2 microns, greater than 5 microns, greater than 10 microns, greater than 20 microns, greater than 30 microns, or greater than 150 microns all measured by optical microscopy, by SEM, or by TEM. Flake pigment can comprise a width in a range of 1 to 150 microns as measured by optical microscopy, by SEM, or by TEM, such as, for example, 5 to 30 microns or 10 to 15 microns all measured optical microscopy, by SEM, by TEM.

Flake pigments can comprise rounded edges, a smooth and flat surface, angular edges, and/or uneven surfaces. Flake pigments comprising flake-shaped particles with angular edges and/or uneven surface are known in the art as "cornflakes". Flake pigments comprising flake-shaped particles distinguished by more rounded edges, smoother, flatter surfaces are referred to as "silver dollar" flakes. Flake pigments can comprise a coating applied thereon, such as, for example, silica coated copper flakes. Electrically conductive pigments can be flake pigments. Radar transmissive pigments can be flake pigments. Flake pigments can be a mixture of both electrically conductive pigments and radar transmissive pigments.

The RT coating system 100 can comprise an area coverage of flake pigments in the RT coating layer 104 of 30% or greater based on a total area coverage of the RT coating layer 104, such as, for example, 35% or greater, 40% or greater, 50% or greater, 60% or greater, 70% or greater, 80% or greater, 90% or greater, or 95% or greater all based on the total area coverage of the RT coating layer 104. The RT coating system 100 can comprise an area coverage of flake pigments in the RT coating layer 104 of 99% or lower based on a total area coverage of the RT coating layer 104, such as, for example, 95% or lower 90% or lower, 80% or lower, 70% or lower, 60% or lower, 50% or lower, 40% or lower, or 35% or lower, all based on the total area coverage of the RT coating layer 104. The RT coating system 100 can comprise an area coverage of flake pigments in the RT coating layer 104 in a range of 30% to 99% based on a total area coverage of the RT coating layer 104, such as, for example, 50% to 99%, 50% to 70%, or 70% to 99%, all based on the total area coverage of the RT coating layer 104.

The area coverage of flake pigments in the RT coating layer 104 as reported herein was determined using a Keyence VK-X260K/X250K confocal laser scanning microscope, using the transparent film mode with a 50x objective and an RT coating layer 104 thickness in a range of 5 μm to 20 μm. The RT coating layer 104 was 12.7 μm while measuring the area coverage of flake pigments in the RT coating layer 104 as reported herein. A height map is output from the confocal laser scanning microscope measurement and the height range threshold for the height map is adjusted until the flake pigments are isolated (e.g., areas where flake pigment is present are blue and all other areas where flake pigment is absent are black). The adjusted height map is loaded into ImageJ analysis software (image analysis software available at https://imagej.nih.gov/ij/ from the National Institutes of Health Bethesda, Maryland) and binarized to create a black and white image where areas that flake pigment is present are one color *(e.g.,* black or white) and all other areas where flake pigment is absent are the opposing color. The area coverage of flake pigments in the RT coating layer 104 as reported herein was calculated based on the area covered by the color representing flake pigments in the binarized image in the ImageJ analysis software based on the total coverage area of both colors.

Typical coating systems having a coating layer comprising a pigment composition consisting of aluminum flake can have a desirable aesthetic appearance but may undesirably reduce radio waves through the typical coating systems. The pigment composition in the RT coating layer 104 can affect the aesthetic appearance of the RT coating system 100 and/or the transmission of radio waves through the RT coating system 100. Thus, it may be desirable to minimize the CIELAB color difference (ΔE) of the RT coating system 100 compared to a color-matched coating system while maintaining desirable transmission of radio waves through the RT coating system 100. As used herein, the phrase "a color-matched coating system" is a reference coating system that includes a coating composition used for the coating layer that comprises a flake pigment composition consisting of aluminum flake. For example, the difference between the RT coating system 100 and the reference color-matched coating system may be the amount of aluminium flake present in the flake pigment composition of each respective system, if any.

The ΔE values reported herein were determined using a multi-angle spectrophotometer, specifically a BYKmac i, with D65 illumination and 10° observer. The ΔE is the difference between two colors in the CIELAB color space based on the difference between collected values of L*, a*, and b*, according to Equation 3.

Equation 3

$$\Delta E = \sqrt{(\Delta L^*)^2 + (\Delta a^*)^2 + (\Delta b^*)^2}$$

The measurements of the ΔE as reported herein were determined from a coating system comprising a substrate, a primer layer, a coating layer, and a clear coat layer. When compared to a color-matched coating system, the RT coating system 100 can comprise a ΔE of 15 or less as measured at 15°, using a multi-angle spectrophotometer with D65 Illumination and 10° observer, such as, 12 or lower, 10 or lower, 8 or lower, or 5 or lower, all as measured at 15° using a multi-angle spectrophotometer with D65 Illumination and 10° observer. When compared to a color-matched coating system, the RT coating system 100 can comprise a ΔE of 3 or greater as measured at 15°, using a multi-angle spectrophotometer with D65 Illumination and 10° observer, such as, 5 or greater, 8 or greater, 10 or greater, or 12 or greater, all as measured at 15°, using a multi-angle spectrophotometer with D65 Illumination and 10° observer. When compared to a color-matched coating system, the RT coating system 100 can comprise a ΔE in a range of 3 to 15 as measured at 15°, using a multi-angle spectrophotometer with D65 Illumination and 10° observer, such as, 3 to 5, 3 to 8, 3 to 10, 3 to 12, 5 to 15, 8 to 15, 10 to 15, 12 to 15, 5 to 8, or 8 to 12 as measured at 15°, using a multi-angle spectrophotometer with D65 Illumination and 10° observer.

When compared to a color-matched coating system, the RT coating system 100 can comprise a ΔE of 6 or less as measured at 25°, using a multi-angle spectrophotometer with D65 Illumination and 10° observer, such as, 5 or less, 4 or less, 3 or less, or 2 or less, all as measured at 25°, using a multi-angle spectrophotometer with D65 Illumination and 10° observer. When compared to a color-matched coating system, the RT coating system 100 can comprise a ΔE of 1 or greater as measured at 25°, using a multi-angle spectrophotometer with D65 Illumination and 10° observer, such as, 2 or greater, 3 or greater, 4 or greater, or 5 or greater, all as measured at 25°, using a multi-angle spectrophotometer with D65 Illumination and 10° observer. When compared to a color-matched coating system, the RT coating system 100 can comprise a ΔE in a range of 1 to 6 compared to a color-matched coating system, as measured at 25°, using a multi-angle spectrophotometer with D65 Illumination and 10° observer, such as, 1 to 2, 1 to 3, 1 to 4, 1 to 5, 2 to 3, 2 to 4, 2 to 5, 2 to 6, 3 to 4, 3 to 5, 3 to 6, 4 to 5, 4 to 6, or 5 to 6, all as measured at 25°, using a multi-angle spectrophotometer with D65 Illumination and 10° observer.

When compared to a color-matched coating system, the RT coating system 100 of the present disclosure can comprise a ΔE of 5 or lower as measured at 45°, using a multi-angle spectrophotometer with D65 Illumination and 10° observer, such as, 4 or lower, 3 or lower, or 2 or lower, all as measured at 45°, using a multi-angle spectrophotometer with D65 Illumination and 10° observer. When compared to a color-matched coating system, the RT coating system 100 of the present disclosure can comprise a ΔE of 1 or greater as measured at 45°, using a multi-angle spectrophotometer with D65 Illumination and 10° observer, such as, 2 or greater, 3 or greater, or 4 or greater, all as measured at 45°, using a multi-angle spectrophotometer with D65 Illumination and 10° observer. When compared to a color-matched coating system, the RT coating system 100 of the present disclosure can comprise a ΔE in a range of 1 to 5 as measured at 45°, using a multi-angle spectrophotometer with D65 Illumination, and 10° observer, such as, 1 to 2, 1 to 3, 1 to 4, 2 to 3, 2 to 4, 2 to 5, 3 to 4, 3 to 5, or 4 to 5, all as measured at 45°, using a multi-angle spectrophotometer with D65 Illumination and 10° observer.

When compared to a color-matched coating system, the RT coating layer 100 of the present disclosure can comprise a ΔE of 5 or lower as measured at 75°, using a multi-angle spectrophotometer with D65 Illumination and 10° observer, such as, 4 or lower, 3 or lower, or 2 or lower, all as measured at 75°, using a multi-angle spectrophotometer with D65 Illumination and 10° observer. When compared to a color-matched coating system, the RT coating system 100 of the present disclosure can comprise a ΔE of 1 or greater as measured at 75°, using a multi-angle spectrophotometer with D65 Illumination and 10° observer, such as, 2 or greater, 3 or greater, or 4 or greater, all as measured at 75°, using a multi-angle spectrophotometer with D65 Illumination and 10° observer. When compared to a color-matched coating system, the RT coating system 100 of the present disclosure can comprise a ΔE in a range from 1 to 5 as measured at 75°, using a multi-angle spectrophotometer with D65 Illumination and 10° observer, such as, 1 to 2, 1 to 3, 1 to 4, 2 to 3, 2 to 4, 2 to 5, 3 to 4, 3 to 5, or 4 to 5, all as measured at 75°, using a multi-angle spectrophotometer with D65 Illumination and 10° observer.

When compared to a color-matched coating system, the RT coating system 100 of the present disclosure can comprise a ΔE of 4 or lower as measured at 110°, using a multi-angle spectrophotometer with D65 Illumination and 10° observer, such as, 3 or lower, 2 or lower, or 1 or lower, all as measured at 110°, using a multi-angle spectrophotometer with D65 Illumination and 10° observer. When compared to a color-matched coating system, the RT coating system 100 of the present disclosure can comprise a ΔE of 0.5 or greater as measured at 110°, using a multi-angle spectrophotometer with D65 Illumination and 10° observer, such as, 1 or greater, 2 or greater, or 3 or greater, all as measured at 110°, using a multi-angle spectrophotometer with D65 Illumination and 10° observer. When compared to a color-matched coating system, the RT coating system 100 of the present disclosure can comprise a ΔE in a range from 0.5 to 4 as measured at 110°, using a multi-angle spectrophotometer with D65 Illumination and 10° observer, such as, 0.5 to 1, 0.5 to 2, 0.5 to 3, 1 to 2, 1 to 3, 1 to 4, 2 to 3, 2 to 4, or 3 to 4, all as measured at 110°, using a multi-angle spectrophotometer with D65 Illumination and 10° observer.

When compared to a color-matched coating system, the RT coating system 100 of the present disclosure can comprise a ΔE of 7 or lower based on an average of the measurements from 15°, 25°, 45°, 75°, and 110°, using a multi-angle spectrophotometer with D65 Illumination and 10° observer, such as, 6 or lower, 5 or lower, 4 or lower, 3 or lower, or 2 or lower, all based on an average of the measurements from 15°, 25°, 45°, 75°, and 110°, using a multi-angle spectrophotometer with D65 Illumination and 10° observer. When compared to a color-matched coating system, the RT coating system 100 of the present disclosure can comprise a ΔE of 1 or greater based on an average of the measurements from 15°, 25°, 45°, 75°, and 110°, using a multi-angle spectrophotometer with D65 Illumination and 10° observer, such as, 2 or greater, 3 or greater, 4 or greater, 5 or greater, or 6 or greater, all based on an average of the measurements from 15°, 25°, 45°, 75°, and 110°, using a multi-angle spectrophotometer with D65 Illumination and 10° observer. When compared to a color-matched coating system, the RT coating system 100 of the present disclosure can comprise a ΔE in a range of 1 to 7 based on an average of the measurements from 15°, 25°, 45°, 75°, and 110°, using a multi-angle spectrophotometer with D65 Illumination and 10° observer, such as, 1 to 3, 1 to 5, 2 to 3, 2 to 4, 2 to 7, 3 to 4, 3 to 7, 4 to 5, 4 to 7, or 6 to 7, all based on an average of the measurements from 15°, 25°, 45°, 75°, and 110°, using a multi-angle spectrophotometer with D65 Illumination and 10° observer.

The primer layer 106 can be disposed adjacent to the RT coating layer 104. The primer layer 106 can lower the ΔE of the RT coating system 100 compared to a color-matched coating system. For example, the primer layer 106 can be opaque and can obscure the color of the substrate 102 (e.g., the primer layer 106 can be hiding). The primer layer 106 may not contain an effect pigment, such as, a reflective pigment, a refractive pigment, a mirror pigment, or an iridescence pigment. The primer layer 106 can comprise a CIELAB L* value of 40 or lower, as measured with an integrating sphere spectrophotometer, with D65 Illumination, 10° observer, and specular component included, such as, 38 or lower, 36 or lower, 34 or lower, or 32 or lower, all as measured using an integrating sphere spectrophotometer, with D65 Illumination, 10° observer, and specular component included. The primer layer 106 can comprise a CIELAB L* value of 30 or greater, as measured with an integrating sphere spectrophotometer, with D65 Illumination, 10° observer, and specular component included, such as, 32 or greater, 34 or greater, 36 or greater, or 38 or greater, all as measured using an integrating sphere spectrophotometer, with D65 Illumination, 10° observer, and specular component included. The primer layer 106 can comprise a CIELAB L* value in a range of 30 to 40, as measured with an integrating sphere spectrophotometer, with D65 Illumination, 10° observer, and specular component included, such as, 30 to 38, 30 to 36, 30 to 34, 30 to 32, 32 to 40, 34 to 40, 36 to 40, 38 to 40, 32 to 38, or 34 to 36, all as measured using an integrating sphere spectrophotometer, with D65 Illumination, 10° observer, and specular component included. The measurements of the primer layer 106 as reported herein were determined with the primer layer applied over the substrate 102.

The RT coating layer 104 can be applied from a RT coating composition comprising a film-forming resin and the pigment composition. The film-forming resin can include a resin that can form a self-supporting continuous film on the substrate 102 or other underlying layer upon removal of any diluents or carriers present with the film-forming resin or upon curing at ambient or elevated temperature. A film-forming resin can comprise any resin used in an automotive original equipment manufacturer coating composition, an automotive refinish coating composition, an industrial coating composition, an architectural coating composition, a coil coating composition, a packaging coating composition, a marine coating composition, an aerospace coating composition, and the like. Film forming resin refers to resins that are self-crosslinking, resins that are crosslinked by reaction with a crosslinker, mixtures thereof and the like. That is, "film-forming resin" can include both a resin and crosslinker therfor.

The film-forming resin can comprise a thermosetting film-forming resin, a thermoplastic film-forming resin, or a combination thereof. As used herein, the term "thermosetting" refers to resins that "set" irreversibly upon curing or crosslinking, where the polymer chains of the polymeric components are joined together by covalent bonds, which is often induced, for example, by heat or radiation. Curing or a crosslinking reaction can be carried out under ambient conditions or at elevated temperatures. Once cured or crosslinked, a thermosetting film-forming resin may not melt upon the application of heat and can be insoluble in conventional solvents. As used herein, the term "thermoplastic" refers to resins that include polymeric components that are not joined by covalent bonds and thereby can undergo liquid flow upon heating and are soluble in conventional solvents.

Thermosetting coating compositions may include a crosslinking agent that may be selected from, for example, aminoplasts, polyisocyanates (including blocked isocyanates), polyepoxides, beta-hydroxyalkylamides, polyacids, anhydrides, organometallic acid-functional materials, polyamines, polyamides, and mixtures of any of the foregoing.

A film-forming resin may have functional groups that are reactive with the crosslinking agent. The film-forming resin in the coatings described herein may be selected from any of a variety of polymers well known in the art. The film-forming resin may be selected from, for example, acrylic polymers, polyester polymers, polyurethane polymers, polyamide polymers, polyether polymers, polysiloxane polymers, copolymers thereof, and mixtures thereof. Generally, these polymers may be any polymers of these types made by any method known to those skilled in the art. The functional groups on the film-forming resin may be selected from any of a variety of reactive functional groups, including, for example, carboxylic acid groups, amine groups, epoxide groups, hydroxyl groups, thiol groups, carbamate groups, amide groups, urea groups, isocyanate groups (including blocked isocyanate groups), mercaptan groups, and combinations thereof.

A method for making an RT coating comprises combining a film-forming resin and a pigment composition to form an RT coating layer 104 comprising a flop index of 2 or greater. The flop index of 2 or greater can be achieved by formulating a pigment composition according to the present disclosure. The RT coating can comprise a radar transmission of greater than 70% such as, greater than 80%.

A method for applying a coating system to a substrate comprises applying a RT coating composition over at least a portion of a substrate 102 to form the RT coating layer 104. The RT coating composition can be applied by spray coating, spin coating, dip coating, roll coating, flow coating, film coating, or a combination thereof. After applying the RT coating composition over the substrate 102, the RT coating composition may be allowed to coalesce to form a substantially continuous film on the substrate 102 and the RT coating composition can be cured to form the RT coating layer 104. The RT coating composition can be cured at a temperature of -10°C or greater, such as, 10°C or greater. The RT coating composition can be cured at a temperature of 175°C or lower, such as, 100°C or lower. The RT coating composition can be cured at a temperature in a range of -10°C to 175°C. The curing can comprise a thermal bake in an oven. Additional layers, such as, the topcoat 108, the primer 106, and combinations thereof, may be applied before or after the RT coating layer 104. In various examples, the RT coating layer 104 may be manufactured as a preformed film and thereafter applied to the substrate. For example, the coating composition can be applied to a substrate, cured, and then removed from the substrate as a preformed film. A release agent may or may not be used to facilitate the release of the preformed film from the substrate.

## EXAMPLES

The present disclosure will be more fully understood by reference to the following examples, which provide illustrative non-limiting aspects of the invention. It is understood that the invention described in this specification is not necessarily limited to the examples described in this section.

As used herein, the term "parts" refers to parts by weight unless indicated to the contrary.

Example 1 - Polyethylene dispersion

A-C® 629 oxidized polyethylene was purchased from Honeywell. To prepare the polyethylene dispersion, a tank was charged with 219.59 pounds ("lbs.") xylene. With mixing turned on, 146.25 lbs. of A-C® 629 oxidized polyethylene was added to the tank and a nitrogen sparge was applied. The material in the tank was heated to 170 degrees Fahrenheit ("°F") and held until dissolved. The material in the tank was then cooled to 160 °F and held for 30 minutes after which 365.98 lbs. of xylene was added. The material in the tank was then held at 120 °F for 30 minutes and the polyethylene dispersion was formed.

Example 2 - Anti-settling intermediate

Claytone 546 was purchased from BYK Additives and Instruments. 49.54 lbs. of polyethylene dispersion from Example 1 was premixed for 45 minutes under Cowles agitation with 362.07 lbs. of n-butyl acetate and 300.68 lbs. of acrylic grind vehicle in a vessel. The Acrylic Grind Vehicle consists of 1% tertiary dodecyl mercaptan, 1% glacial acrylic acid inhibited, 10% 2-hydroxyethyl acrylate, 19% n-butyl methacrylate, 2% methacrylic acid, 20% 2-ethylhexyl acrylate, 18% methyl methacrylate, and 29% styrene made at 53% solids by weight in a 22% isobutyl alcohol/67% exempt VM&P naphtha/11% n-butyl acetate solvent mixture. 61.93 lbs. of Claytone 546 was added to the vessel and mixed at high speed for 60 minutes using a Cowles blade. The material was then milled on a horizontal mill using 1 mm media for two hours to create the anti-settling intermediate.

Example 3 - Paint base preparation

The components listed in Table 1 were added in order starting at the top of Table 1 while mixing at low speed in order to create a paint base. Conventional solvent-borne tints (e.g., carbon black, pigment blue 60, white $TiO_2$, pigment blue 15:2, pigment violet 29) were used in preparation of a paint base.

Table 1 - Paint base components

| Order of Addition | Component | Description | Manufacturer | Weight (g) |
|---|---|---|---|---|
| 1st | Diisobutyl ketone | Solvent | Dow Chemical Co. | 106.80 |
| 2nd | n-butyl propionate | Solvent | Dow Chemical Co. | 26.66 |
| 3rd | Automotive topcoat microgel | Acrylic Resin[1] | PPG | 72.76 |
| 4th | Resimene CD-6528 | Melamine Resin | INEOS | 48.53 |
| 5th | Resimene 758 | Melamine Resin | INEOS | 79.89 |
| 6th | Resimene MR-225 | Melamine Resin | INEOS | 20.81 |
| 7th | Anti-settling intermediate from Example 2 | Additive | PPG | 48.38 |
| 8th | Acrylic Polyol A | Acrylic Resin[2] | PPG | 23.73 |
| 9th | Acrylic Polyol B | Acrylic Resin[3] | PPG | 77.34 |
| 10th | Polyester A | Polyester Resin[4] | PPG | 46.54 |
| 11th | Phosphatized epoxy polymer | Epoxy Resin[5] | PPG | 1.36 |
| 12th | Primary amyl alcohol | Solvent | BASF | 15.94 |
| 13th | Poly THF 1000 | Polyol Resin | BASF | 5.41 |
| 14th | Carbon black tint | Tint | PPG | 1.55 |
| 15th | Pigment blue 60 tint | Tint | PPG | 0.56 |

(continued)

| Order of Addition | Component | Description | Manufacturer | Weight (g) |
|---|---|---|---|---|
| 16th | White $TiO_2$ tint | Tint | PPG | 0.25 |
| 17th | Pigment blue 15:2 tint | Tint | PPG | 0.17 |
| 18th | Pigment violet 29 tint | Tint | PPG | 0.39 |
| 19th | Polyester B | Polyester Resin[6] | PPG | 10.72 |
| 20th | n-butyl acetate urethane grade | Solvent | BASF | 44.98 |

[1] Prepared as described in Example 1 in U.S. patent 5,212,273.

[2] Acrylic Polyol A consists of 18% n-butyl methacrylate, 40% hydroxypropyl acrylate, 1% methyl methacrylate, 20% styrene, 19% n-butyl acrylate, and 2% glacial acrylic acid made at 67% solids by weight in a 58% methyl ether propylene glycol acetate/39% aromatic 100/3% acetone solvent mixture with a GPC weight average molecular weight of 8600 and an acid value of 10.6.

[3] Acrylic Polyol B consists of 1% tertiary dodecane thiol, 10% 2-hydroxyethyl acrylate, 19% n-butyl methacrylate, 2% methacrylic acid, 20% 2-ethylhexyl acrylate, 18% methyl methacrylate, and 30% styrene made at 51% solids by weight in a 22% isobutyl alcohol/68% exempt VM&P naphthal10% toluene solvent mixture.

[4] Polyester A consists of 8% adipic acid, 34% isophthalic acid, 16% E-caprolactone, 18% dimethyl-2,2-propanediol-1,3, 16% neopentyl glycol hydroxy pivalate, and 8% trimethylol propane made at 71% solids by weight in n-butyl acetate solvent.

[5] Phosphatized epoxy polymer consists of 67% Eponex 1511 (Hexion Specialty Chemicals) and 85% phosphoric acid made at 60% solids by weight in a 91% hexyl cellosolve/9% deionized water solvent blend.

[6] Polyester B consists of 59% Empol 1008 dimer acid (BASF), 17% neopentyl glycol, 18% cyclohexanedimethanol-1,4, and 6% trimethylol propane made neat at 100% solids by weight.

Example 4 - Silver color coating formulations

The paint base prepared in Example 3 was used to prepare silver color coatings ("CCs"), Silver CC 1, Silver CC 2, and Silver CC 3, as shown in Table 2 with various levels of aluminum flake and mica. The components of the Silver CC 1-3 listed in Table 2 were combined and mixed thoroughly to create the silver CCs 1-3. The compositions of the Silver CCs 1-3 are listed in Table 3 on a weight percentage basis.

Table 2 - Silver CC compositions

| Component | Silver Color Coating 1* | Silver Color Coating 2 | Silver Color Coating 3* |
|---|---|---|---|
| Paint Base (g) | 635.18 | 587.79 | 668.56 |
| Aluminum Paste 634A[7] (g) | 32.41 | 30.00 | -- |
| TSB 2044A Aluminum Paste[8] (g) | 32.41 | -- | -- |
| KT-7104 (g)[9] | -- | 30.00 | 33.01 |
| Iriodin 9602 Silver-Grey[10] (g) | -- | | 33.01 |
| **Total (g)** | 700.00 | 647.79 | 734.58 |

[7] Aluminum Paste 634A was purchased from Toyal Aluminum K.K..

[8] TSB 2044A Aluminum Paste was purchased from Toyal America.

[9] KT-7104 luster white mica was obtained from Kolortek Co., Ltd.

[10] Iriodin 9602 Silver-Grey mica was purchased from EMD Performance Materials.

* Comparative Composition

Table 3 - Silver CC compositions weight percentage basis

| Panel | Pigment composition (% by weight based on the total weight of the color coating) | Aluminum Flake (% by weight based on the weight of the pigment composition) | Mica (% by weight based on the weight of the pigment composition) |
|---|---|---|---|
| Silver CC 1 | 9.26 | 100 | 0 |
| Silver CC 2 | 9.26 | 41.5 | 58.5 |
| Silver CC 3 | 8.98 | 0 | 100 |

Example 5 - Coating system application to panels

Automotive TPO panels (Lyondell Hasell Hifax TPO, Standard Plaque Inc.) comprising a width of 4 inches, a length of 12 inches, and a thickness of 0.118 inches were hand sprayed with CMPP3700 commercial adhesion promoter available from PPG Industries Inc., Pittsburgh, PA, at 7 μm dry film thickness. The adhesion promoter coated TPO panels were dried overnight at ambient conditions. The CIELAB color of the TPO panels was measured before application of the adhesion promoter and after application of the adhesion promoter using specular-excluded data from an X-rite Color i7800 integrating sphere spectrophotometer with D65 illumination and a 10 ° observer. The results are listed in Table 4.

Table 4: Color Data for TPO panel and adhesion promoter coated TPO panel

| Sample | L* | a* | b* |
|---|---|---|---|
| TPO panel only | 20.87 | 0.13 | -0.30 |
| Adhesion promoter coated TPO panel | 35.59 | -0.71 | -4.50 |

The adhesion promoter coated TPO panels were then coated with the Silver CCs 1-3 prepared in Example 4 via a spray gun mounted on a Spraymation model No. 310881. The traverse speed on the Spraymation was set to 1,000 inches per minute, the spray gun was opened 20 clicks, and the Silver CCs 1-3 were applied in two coats that totaled 20 μm dry film thickness to their respective panels. The TPO panels coated with the Silver CCs 1-3 were flashed at ambient conditions for two minutes followed by a five-minute bake at 80 °C. TKU2000CS commercial clearcoat available from PPG Industries Inc., Pittsburgh, PA, was then applied to the TPO panels coated with Silver CCs 1-3 in two coats totaling 46 μm dry film thickness at 850 inches per minute traverse speed with the spray gun open 28 clicks, followed by a 10-minute ambient flash and then a 30-minute bake at 141 °C on each panel to create silver panels 1-3. Silver panel 1 is a TPO panel coated with adhesion promoter, Silver CC 1, and clearcoat. Silver panel 2 is a TPO panel coated with adhesion promoter, Silver CC 2, and clearcoat. Silver panel 3 is a TPO panel coated with adhesion promoter, Silver CC 3, and clearcoat.

Example 6 - Measurements

The silver panels 1-3 prepared in Example 5 were measured for CIELAB color at multiple angles using a BYK-mac i spectrophotometer. To determine the difference in color between the control, silver panels 1 and 3, and the inventive panel, silver panel 2, the L*, a*, and b* values of the silver panels 1-3 were measured using a BKY-mac i spectrophotometer with D65 illumination and a 10° observer. The color data for each silver panel 1-3 is listed in Tables 5-7. The flop index was calculated for silver panels 1-3 using Equation 1 and are listed in Table 5. The color difference, ΔE, values were calculated for silver panels 1-3 using Equation 3 and are listed in Table 8.

Table 5 - CIELAB L* values for silver panels 1-3

| Panel | Angle of measurement | | | | | Flop Index |
|---|---|---|---|---|---|---|
| | 15° | 25° | 45° | 75° | 110° | |
| Silver panel 1 | 148.81 | 105.14 | 52.56 | 31.26 | 26.04 | 18.6 |
| Silver panel 2 | 137.40 | 100.78 | 55.93 | 34.97 | 28.42 | 15.4 |

(continued)

| Panel | Angle of measurement | | | | | Flop Index |
|---|---|---|---|---|---|---|
| | 15° | 25° | 45° | 75° | 110° | |
| Silver panel 3 | 116.30 | 76.56 | 36.93 | 22.48 | 18.53 | 19.5 |

Table 6 - CIELAB a* values for silver panels 1-3

| Panel | Angle of measurement | | | | |
|---|---|---|---|---|---|
| | 15° | 25° | 45° | 75° | 110° |
| Silver panel 1 | -0.64 | -0.44 | -0.33 | -0.33 | -0.49 |
| Silver panel 2 | -0.82 | -0.38 | -0.34 | -0.37 | -0.50 |
| Silver panel 3 | -2.14 | -1.46 | -0.72 | -0.04 | 0.21 |

Table 7 - CIELAB b* values for silver panels 1-3

| Panel | Angle of measurement | | | | |
|---|---|---|---|---|---|
| | 15° | 25° | 45° | 75° | 110° |
| Silver panel 1 | -0.21 | -0.90 | -1.00 | -1.14 | -1.56 |
| Silver panel 2 | -0.80 | -0.17 | -0.76 | -1.74 | -2.72 |
| Silver panel 3 | -4.27 | -3.35 | -3.91 | -5.00 | -5.42 |

Table 8 - Color difference, ΔE, values for silver panels 1-3

| Panel | Angle of measurement | | | | | |
|---|---|---|---|---|---|---|
| | 15° | 25° | 45° | 75° | 110° | Average of measurements |
| Silver panel 1 | 0 | 0 | 0 | 0 | 0 | 0 |
| Silver panel 2 | 11.42 | 4.42 | 3.37 | 3.76 | 2.65 | 5.12 |
| Silver panel 3 | 32.79 | 28.70 | 15.91 | 9.59 | 8.47 | 19.09 |

Insertion loss was measured using a focused beam method at Compass Technology Group (Alpharetta, Georgia) for silver panels 1-3 according to standard test method CTG-TM-0100-2018, available at: https://compasstech.com/wp-content/uploads/2018/06/CTG-Focused-Beam-Mesurement-System-Standard.pdf. The insertion loss measurement occurred in a radar range of 60 GHz to 90 GHz (3001 points) using an IF bandwidth of 1000 Hz, no averaging factor, and a 0.5 ns time-domain gate. The insertion loss was measured on a Copper Mountain Technologies 4220 network analyzer driving the E-Band modules using the power levels recommended by the manufacturer.

The insertion loss was measured by passing radio waves comprising a frequency of 77 GHz through the TPO panel, the adhesion promoter, the silver coating layer, and the clearcoat. The insertion loss at 77 GHz was reported in decibels ("dB") and converted to percent transmission using Equation 2. The results of the insertion loss measurements are listed in Table 9.

Table 9 - Insertion loss and percent transmission for silver panels 1-3

| Panel | 77 GHz Insertion Loss (dB) | Percent Transmission at 77 GHz |
|---|---|---|
| Silver panel 1 | -1.97 | 63.5 |
| Silver panel 2 | -1.41 | 72.3 |
| Silver panel 3 | -1.11 | 77.4 |

As shown in Table 9, silver panel 2 has a 14% improvement in radar signal transmission compared to silver panel 1 as measured at 77 GHz according to CTG-TM-0100-2018. Silver panel 3 has a 22% improvement in radar signal transmission compared to silver panel 1 as measured at 77 GHz according to CTG-TM-0100-2018.

While the examples show the use of a pigment composition comprising 41.5% by weight aluminum flake and 58.5 % by weight mica and a pigment composition comprising 100 % by mica, it will be understood that RT coating layer can comprise a suitable ΔE and radar signal transmission throughout the ranges of aluminum flake and mica described herein.

Example 7 - Area Coverage

The silver panels 1-3 prepared in Example 5 were measured for area coverage of the flake pigments (e.g., mica and aluminium flake) in the silver CC 1-3 cured thereon. The area coverage of flake pigments of the silver CC 1-3 cured on silver panels 1-3 was determined using a Keyence VK-X260K/X250K confocal laser scanning microscope, using the transparent film mode with a 50x objective. The height map output from the microscope was adjusted to isolate the flake pigment and binarized with ImageJ software to calculate area coverage of the flake pigments of the silver CC 1-3 cured on silver panels 1-3. The results are listed in Table 10.

Table 10 - Area Coverage for silver panels 1-3

| Panel | Area Coverage of Flake Pigment (%) |
|---|---|
| Silver panel 1 | 98.09 ± 0.95 |
| Silver panel 2 | 98.88 ± 0.09 |
| Silver panel 3 | 97.41 ± 0.13 |

As shown in Table 10, the area coverage of flake pigments in the silver CC 1-3 cured on silver panels 1-3 was sufficient to provide a desired color of the respective panel.

Example 8 - Additional Comparative Silver Color Coatings

The components listed in Table 11 were added in order starting at the top of Table 11 to create silver color coating 4 ("silver CC 4") similar to Chinese Patent Application No. 201811630188.2 by Zhong-min et al. Components 1-7 were added while mixing with a disperser (e.g., Cowles) blade until homogenous then the remaining components were added while mixing with a propeller mixing blade. Additionally, a control coating ("silver CC 5") was made the same as silver CC 4 except the mica pigment was replaced with the same volume of Aluminium Flake. The components listed in Table 12 were added in order starting at the top of Table 12 while mixing, in the same manner as those from Table 11, in order to create silver CC 5.

Table 11 - Silver CC 4 Formulation

| Order of Addition | Component | Description | Weight (g) |
|---|---|---|---|
| 1st | Ceratix 8561, BYK EVA co-polymer wax | | 14.1 |
| 2nd | Acrylic Maleic Anhydride Copolymer | Acrylic Resin. Single-component acrylic resin with hydroxyl group content on non-volatiles less than 2.0 | 4.9 |
| 3rd | Setal 90173, Setalux 91715, or Setalux 91795 | Modified resin. Anti-sagging agent | 1.8 |
| | | modified polyester | |
| 4th | Allnex Setamine US138 | Amino rheological agent | 3.1 |
| 5th | CAB 531-1 | Acetate cellulose | 15.3 |
| 6th | CAB 381-0.5 | Acetate cellulose | 12.2 |
| 7th | BYK 300 | Leveling agent | 0.3 |
| 8th | Merck Iriodin 9602 | Mica pigment | 4.3 |

(continued)

| Order of Addition | Component | Description | Weight (g) |
|---|---|---|---|
| 9th | Efka FA 4665 | Dispersing agent | 0.2 |
| 10th | Butyl acetate | Solvent | 43.8 |

Table 12 - Silver CC 5 Formulation

| Order of Addition | Component | Description | Weight (g) |
|---|---|---|---|
| 1st | Ceratix 8561, BYK EVA co-polymer wax | | 13.9 |
| 2nd | Acrylic Maleic Anhydride Copolymer | Acrylic Resin. Single-component acrylic resin with hydroxyl group content on non-volatiles less than 2.0 | 4.8 |
| 3rd | Setal 90173, Setalux 91715, or Setalux 91795 | Modified resin. Anti-sagging agent modified polyester | 1.8 |
| 4th | Allnex Setamine US138 | Amino rheological agent | 3.0 |
| 5th | CAB 531-1 | Acetate cellulose | 15.1 |
| 6th | CAB 381-0.5 | Acetate cellulose | 12.1 |
| 7th | BYK 300 | Leveling agent | 0.3 |
| 8th | Aluminum Paste, Toyal 6340NS | Aluminum Flake Pigment | 2.7 |
| 9th | Aluminum Paste, Toya ITSB 2044A | Aluminum Flake Pigment | 2.6 |
| 10th | Efka FA 4665 | Dispersing agent | 0.2 |
| 11th | Butyl acetate | Solvent | 43.3 |

Thereafter, TPO panels (Lyondell Basell HiFax TRC779X, 4 inches x 12 inches x 0.118-inch, available from Standard Plaque, Inc.) were cleaned with SXA-330 and coated with SU-4903 adhesion promoter, both from PPG Industries. The CIELAB color of the TPO panels after application of the adhesion promoter were measured using specular-excluded data from an X-rite Color i7800 integrating sphere spectrophotometer with D65 illumination and a 10 ° observer. The results are listed in Table 13.

Table 13: Color Data for TPO panels and adhesion promoter coated TPO panels

| Sample | L* | a* | b* |
|---|---|---|---|
| TPO panel only | 20.85 | 0.04 | -0.85 |
| TPO panel + adhesion promoter | 21.23 | 0.05 | -0.44 |

Some adhesion promoter coated TPO panels were then sprayed with silver CC4 of Table 11 ("silver panel 4") and other adhesion promoter coated TPO panels were sprayed with silver CC5 of Table 12 ("silver panel 5"). Both silver CC4 and silver CC5 were sprayed after thinning with DT870 (available from PPG industries) at a 2:1 volume ratio of silver CC4 or silver CC5 to DT870. Additionally, silver panels 4 and 5 were coated with a top coat of DC4000 (available from PPG Industries) using DCH3085 hardener at a 4:1 volume ratio of DC4000:DCH3085.

To determine the difference in color between the control, silver panel 5, and the silver panel 4, the L*, a*, and b* values of the silver panels 4-5 were measured using a BKY-mac i spectrophotometer with D65 illumination and a 10° observer. The color data for each silver panel 4-5 is listed in Tables 14-16. The flop index was calculated for silver panels 4-5 using Equation 1 and are listed in Table 14. The color difference, ΔE, values were calculated for silver panels 4-5 using Equation 3 and are listed in Table 17.

Table 14 - CIELAB L* values for silver panels 4-5

| Panel | Angle of measurement | | | | | Flop Index |
|---|---|---|---|---|---|---|
| | 15° | 25° | 45° | 75° | 110° | |
| Silver panel 4 | 109.68 | 77.19 | 38.30 | 20.32 | 14.63 | 18.4 |
| Silver panel 5 | 135.43 | 102.46 | 58.24 | 37.06 | 30.28 | 14.3 |

Table 15 - CIELAB a* values for silver panels 4-5

| Panel | Angle of measurement | | | | |
|---|---|---|---|---|---|
| | 15° | 25° | 45° | 75° | 110° |
| Silver panel 4 | -0.58 | -0.33 | 0.07 | 0.49 | 0.74 |
| Silver panel 5 | -0.76 | -0.56 | -0.47 | -0.54 | -0.73 |

Table 16 - CIELAB b* values for silver panels 4-5

| Panel | Angle of measurement | | | | |
|---|---|---|---|---|---|
| | 15° | 25° | 45° | 75° | 110° |
| Silver panel 4 | -2.63 | -2.84 | -3.45 | -4.82 | -5.26 |
| Silver panel 5 | 0.36 | -0.14 | -0.41 | -0.57 | -0.83 |

Table 17 - Color difference, ΔE, values for silver panels 4-5 using silver panel 5 as the color reference

| Panel | Angle of measurement | | | | | |
|---|---|---|---|---|---|---|
| | 15° | 25° | 45° | 75° | 110° | Average of measurements |
| Silver panel 4 | 25.92 | 25.41 | 20.17 | 17.30 | 16.34 | 21.03 |
| Silver panel 5 | 0.00 | 0.00 | 0.00 | 0.00 | 0.00 | 0.00 |

Color difference, ΔE, values at 15° and 110° can be more difficult to match for silver color coatings than some other angles. As shown in Table 17 above, silver panel 4 had a color difference, ΔE, value at 15° of greater than 25 and a color difference, ΔE, value at 110° of greater than 16 which may be undesirable in some applications.

Claims

1. A coating composition comprising:

a film-forming resin; and
1% to 25% of a flake pigment composition based on the total weight of the coating composition, the flake pigment composition comprising:

50% or greater by weight of a radar transmissive pigment based on the total weight of the pigment composition, wherein the radar transmissive pigment comprises mica pigment, oxide coated mica pigment, glass flake, oxide coated glass flake, visible light diffractive pigment, visible light reflective organic pigment, metal oxide platelets, or a combination thereof; and
no greater than 50% by weight electrically conductive pigment based on the total weight of the pigment composition;
wherein the pigment composition comprises 0.065% to 50% by weight aluminum flake based on the total weight of the pigment composition;

wherein when the coating composition is applied over a thermoplastic polyolefin substrate and cured at a dry film thickness of 20 $\mu$m to form a coating system, the coating system:

transmits 70% or greater of electromagnetic radiation comprising a frequency of 1 GHz to 100 GHz through the coating system; and

has a flop index of 5 or greater, wherein the flop index = 2.69 $(L_1 - L_3)^{1.11}$ / $(L_2)^{0.86}$, and wherein

$L_1$ is a CIELAB L* value as measured at 15°, using a multi-angle spectrophotometer with D65 Illumination and 10° observer,

$L_2$ is a CIELAB L* value as measured at 45°, using a multi-angle spectrophotometer with D65 Illumination and 10° observer, and

$L_3$ is a CIELAB L* value as measured at 110°, using a multi-angle spectrophotometer with D65 Illumination and 10° observer, and

has a CIELAB $\Delta$E of 4 or less as compared to a color-matched coating system as measured at 110°, using a multi-angle spectrophotometer with D65 Illumination and 10° observer.

2. The coating composition of claim 1, wherein the pigment composition comprises 5% to 45% by weight aluminum flake based on the total weight of the pigment composition or 2% or less by weight of aluminum flake.

3. The coating composition of any one of claims 1-2, wherein the coating system transmits 80% or greater of electromagnetic radiation comprising a frequency of 1 GHz to 100 GHz through the coating system; and/or wherein the coating system comprises a CIELAB $\Delta$E of 15 or less compared to a color-matched coating system, as measured at 15°, using a multi-angle spectrophotometer with D65 Illumination and 10° observer.

4. The coating composition of any one of claims 1-3, wherein the pigment composition comprises an average particle size of 1 $\mu$m to 100 $\mu$m.

5. A coating layer formed by the coating composition of any one of claims 1-4.

6. The coating layer of claim 5, wherein the coating layer comprises a dry film thickness of 5 $\mu$m to 100 $\mu$m.

7. A coating system comprising:
the coating layer of any one of claims 5-6 applied over a radar transmissive substrate.

8. The coating system of claim 7 further comprising
a primer layer applied over the substrate, wherein the CIELAB L* value of the primer layer applied over the substrate is in a range of 30 to 40 as measured with an integrating sphere spectrophotometer with D65 Illumination, 10° observer, and specular component included.

9. The coating system of any one of claims 7-8, wherein the substrate comprises at least a portion of a vehicle component, and the vehicle component preferably comprises a radar system.

10. The coating system of any one of claims 7-9, wherein the coating system has an area coverage of flake pigments in the coating layer of 30% to 99%, preferably of 50% to 99% based on a total area coverage of the coating layer.

11. A method for making the coating system of any one of claims 7-10, the method comprising:

combining the film-forming resin and the flake pigment composition to form the coating composition; and
applying and curing the coating composition to form the coating layer.

12. The method of claim 11 further comprising

applying a topcoat composition over the coating layer after forming the coating layer; and/or
applying the coating composition over the substrate and curing the coating composition on the substrate; or
applying the coating composition over a surface;
curing the coating composition to form a film on the surface;
removing the film from the surface to create preformed film; and
applying the preformed film over the substrate.

**13.** A method of making the coating composition of any one of claims 1-4, the method comprising:
combining the film-forming resin and the flake pigment composition to form the coating composition.

**14.** The coating composition of any one of claims 1-4 comprising:

0.065% to 11% by weight aluminum flake based on the total weight of the pigment composition; and/or
wherein when the coating composition is applied over a thermoplastic polyolefin substrate and cured at a dry film thickness of 12.7 $\mu$m to form a coating layer, an area coverage of flake pigments in the coating layer is 30% to 99%, preferably 50% to 99% based on a total area coverage of the coating layer.

**15.** Use of a composition of any one of claims 1-4 for forming a coating system which:

transmits 70% or greater of electromagnetic radiation comprising a frequency of 1 GHz to 100 GHz through the coating system; and
has a flop index of 2 or greater, wherein the flop index = 2.69 $(L_1-L_3)^{1.11}/(L_2)^{0.86}$, and wherein

$L_1$ is a CIELAB L* value as measured at 15°, using a multiangle spectrophotometer with D65 Illumination and 10° observer,
$L_2$ is a CIELAB L* value as measured at 45°, using a multiangle spectrophotometer with D65 Illumination and 10° observer, and
$L_3$ is a CIELAB L* value as measured at 110°, using a multiangle spectrophotometer with D65 Illumination and 10° observer, and

has a CIELAB $\Delta$E of 4 or less as compared to a color-matched coating system as measured at 110°, using a multiangle spectrophotometer with D65 Illumination and 10° observer,
when the coating composition is applied over a thermoplastic polyolefin substrate and cured at a dry film thickness of 20 $\mu$m.

**Patentansprüche**

**1.** Eine Beschichtungszusammensetzung umfassend:

ein filmbildendes Harz und
1 bis 25% einer Zusammensetzung von plättchenförmigem Pigment, bezogen auf das Gesamtgewicht der Beschichtungszusammensetzung, wobei die Zusammensetzung von plättchenförmigem Pigment umfasst:

50 oder mehr Gew.-% eines radardurchlässigen Pigments, bezogen auf das Gesamtgewicht der Pigmentzusammensetzung, wobei das radardurchlässige Pigment Glimmerpigment, oxidbeschichtetes Glimmerpigment, Glasplättchen, oxidbeschichtetes Glasplättchen, sichtbares Licht brechendes Pigment, sichtbares Licht reflektierendes organisches Pigment, Metalloxidplättchen oder eine Kombination davon umfasst; und nicht mehr als 50 Gew.-% elektrisch leitfähigen Pigments, bezogen auf das Gesamtgewicht der Pigmentzusammensetzung;
wobei die Pigmentzusammensetzung 0,065 Gew.-% bis 50 Gew.-% Aluminiumplättchen umfasst, bezogen auf das Gesamtgewicht der Pigmentzusammensetzung;
wobei, wenn die Beschichtungszusammensetzung über einem thermoplastischem Polyolefinsubstrat aufgebracht und zu einer Trockenfilmdicke von 20 $\mu$m gehärtet ist, um ein Beschichtungssystem zu bilden, das Beschichtungssystem:

70% oder mehr an elektromagnetischer Strahlung umfassend eine Frequenz von 1 GHz bis 100 GHz durch das Beschichtungssystem durchlässt; und
einen Flop-Index von 5 oder mehr aufweist, wobei der Flop-Index = 2.69 $(L_1-L_3)^{1.11}/(L_2)^{0.86}$ und wobei $L_1$ ein CIELAB L*-Wert, gemessen bei 15° unter Verwendung eines Mehrwinkelspektralphotometers mit D65-Beleuchtung und 10° Beobachter, ist,
$L_2$ ein CIELAB L*-Wert, gemessen bei 45° unter Verwendung eines Mehrwinkelspektralphotometers mit D65-Beleuchtung und 10° Beobachter, ist, und
$L_3$ ein CIELAB L*-Wert, gemessen bei 110° unter Verwendung eines Mehrwinkelspektralphotometers mit D65-Beleuchtung und 10° Beobachter, ist, und

einen CIELAB ∆E von 4 oder weniger im Vergleich zu einem farblich abgestimmten Beschichtungssystem aufweist, gemessen bei 110° unter Verwendung eines Mehrwinkelspektralphotometers mit D65-Beleuchtung und 10° Beobachter.

2. Die Beschichtungszusammensetzung gemäß Anspruch 1, wobei die Pigmentzusammensetzung 5 Gew.-% bis 45 Gew.-% Aluminiumplättchen, bezogen auf das Gesamtgewicht der Pigmentzusammensetzung, oder 2 Gew.-% oder weniger an Aluminiumplättchen umfasst.

3. Die Beschichtungszusammensetzung gemäß irgendeinem der Ansprüche 1 bis 2, wobei das Beschichtungssystem 80% oder mehr an elektromagnetischer Strahlung umfassend eine Frequenz von 1 GHz bis 100 GHz durch das Beschichtungssystem hindurchlässt; und/oder wobei das Beschichtungssystem einen CIELAB ∆E von 15 oder weniger im Vergleich zu einem farblich abgestimmten Beschichtungssystem umfasst, gemessen bei 15° unter Verwendung eines Mehrwinkelspektralphotometers mit D65-Beleuchtung und 10° Beobachter.

4. Die Beschichtungszusammensetzung gemäß irgendeinem der Ansprüche 1 bis 3, wobei die Pigmentzusammensetzung eine durchschnittliche Partikelgröße von 1 μm bis 100 μm umfasst.

5. Eine Beschichtungsschicht gebildet aus der Beschichtungszusammensetzung gemäß irgendeinem der Ansprüche 1 bis 4.

6. Die Beschichtungsschicht gemäß Anspruch 5, wobei die Beschichtungsschicht eine Trockenfilmdicke von 5 μm bis 100 μm aufweist.

7. Ein Beschichtungssystem umfassend:
die Beschichtungsschicht gemäß irgendeinem der Ansprüche 5 bis 6, aufgebracht über einem radardurchlässigen Substrat.

8. Das Beschichtungssystem gemäß Anspruch 7, des Weiteren umfassend:
eine Haftvermittlerschicht aufgebracht über dem Substrat, wobei der CIELAB L*-Wert der Haftvermittlerschicht, die über dem Substrat aufgebracht ist, in einem Bereich von 30 bis 40 liegt, gemessen mit einem Ulbricht-Kugel-Spektralphotometer mit D65-Beleuchtung, 10° Beobachter und Spiegelglanz eingeschlossen.

9. Das Beschichtungssystem gemäß irgendeinem der Ansprüche 7 bis 8, wobei das Substrat mindestens einen Teil eines Fahrzeugbestandteils umfasst und der Fahrzeugbestandteil vorzugsweise ein Radarsystem umfasst.

10. Das Beschichtungssystem gemäß irgendeinem der Ansprüche 7 bis 9, wobei das Beschichtungssystem eine Flächenbedeckung der plättchenförmigen Pigmente in der Beschichtungsschicht von 30 bis 99% aufweist, vorzugsweise von 50 bis 99%, bezogen auf eine gesamte Flächenbedeckung der Beschichtungsschicht.

11. Ein Verfahren zur Herstellung des Beschichtungssystems gemäß irgendeinem der Ansprüche 7 bis 10, das Verfahren umfassend:

Vereinen des filmbildenden Harzes und der Zusammensetzung von plättchenförmigem Pigment, um die Beschichtungszusammensetzung zu bilden; und
Aufbringen und Härten der Beschichtungszusammensetzung, um die Beschichtungsschicht zu bilden.

12. Das Verfahren gemäß Anspruch 11, des Weiteren umfassend:

Aufbringen einer Deckschichtzusammensetzung über der Beschichtungsschicht nach dem Bilden der Beschichtungsschicht; und/oder
Aufbringen der Beschichtungszusammensetzung über dem Substrat und Härten der Beschichtungszusammensetzung auf dem Substrat; oder
Aufbringen der Beschichtungszusammensetzung über einer Oberfläche;
Härten der Beschichtungszusammensetzung, damit sie einen Film auf der Oberfläche bildet;
Entfernen des Films von der Oberfläche, um einen vorgeformten Film zu erzeugen; und
Aufbringen des vorgeformten Films über dem Substrat.

13. Ein Verfahren zur Herstellung der Beschichtungszusammensetzung gemäß irgendeinem der Ansprüche 1 bis 4, das Verfahren umfassend:
Vereinen des filmbildenden Harzes und der Zusammensetzung plättchenförmigen Pigments, um die Beschichtungszusammensetzung zu bilden.

**14.** Die Beschichtungszusammensetzung gemäß irgendeinem der Ansprüche 1 bis 4 umfassend:

0,065 Gew.-% bis 11 Gew.-% Aluminiumplättchen, bezogen auf das Gesamtgewicht der Pigmentzusammensetzung; und/oder
wobei, wenn die Beschichtungszusammensetzung auf ein thermoplastisches Polyolefinsubstrat aufgebracht und zu einer Trockenfilmdicke von 12,7 $\mu$m gehärtet ist, um eine Beschichtungsschicht zu bilden, eine Flächenbedeckung von plättchenförmigen Pigmenten in der Beschichtungszusammensetzung 30% bis 99%, vorzugsweise 50% bis 99% beträgt, bezogen auf eine Gesamtflächenbedeckung der Beschichtungsschicht.

**15.** Verwendung einer Zusammensetzung gemäß irgendeinem der Ansprüche 1 bis 4 zur Bildung eines Beschichtungssystems, welches:

70% oder mehr an elektromagnetischer Strahlung umfassend eine Frequenz von 1 GHz bis 100 GHz durch das Beschichtungssystem hindurchlässt, und
einen Flop-Index von 2 oder mehr aufweist, wobei der Flop-Index = 2.69 $(L_1-L_3)^{1.11}$ / $(L_2)^{0.86}$ und wobei
$L_1$ ein CIELAB L*-Wert, gemessen bei 15° unter Verwendung eines Mehrwinkelspektralphotometers mit D65-Beleuchtung und 10° Beobachter, ist,
$L_2$ ein CIELAB L*-Wert, gemessen bei 45°, unter Verwendung eines Mehrwinkelspektralphotometers mit D65-Beleuchtung und 10° Beobachter, ist, und
$L_3$ ein CIELAB L*-Wert, gemessen bei 110° unter Verwendung eines Mehrwinkelspektralphotometers mit D65-Beleuchtung und 10° Beobachter, ist, und
einen CIELAB $\Delta$E von 4 oder weniger im Vergleich zu einem farblich abgestimmten Beschichtungssystem aufweist, gemessen bei 110° unter Verwendung eines Mehrwinkelspektralphotometers mit D65-Beleuchtung und 10° Beobachter,
wenn die Beschichtungszusammensetzung über einem thermoplastischen Polyolefinsubstrat aufgebracht und zu einer Trockenfilmdicke von 20 $\mu$m gehärtet ist.

## Revendications

**1.** Composition de revêtement comprenant :

une résine filmogène,
et 1 % à 25 % d'une composition de pigment à paillettes, par rapport au poids total de la composition de revêtement, laquelle composition de pigment à paillettes comprend :

50 % en poids ou plus d'un pigment transmetteur radar, par rapport au poids total de la composition de pigment, lequel pigment transmetteur radar comprend un pigment mica, un pigment mica revêtu d'oxyde, des paillettes de verre, des paillettes de verre revêtues d'oxyde, un pigment diffractant la lumière visible, un pigment organique réfléchissant la lumière visible, des paillettes d'oxyde de métal, ou une combinaison de tels pigments,
et pas plus de 50 % en poids d'un pigment électroconducteur, par rapport au poids total de la composition de pigment,
étant entendu que la composition de pigment comprend de 0,065 % à 50 % en poids de paillettes d'aluminium, par rapport au poids total de la composition de pigment,
et étant entendu que, quand la composition de revêtement est appliquée sur un substrat en polyoléfine thermoplastique et durcie, donnant un film sec épais de 20 $\mu$m, pour former un système de revêtement, ce système de revêtement :

- transmet 70 % ou plus d'un rayonnement électromagnétique comprenant une fréquence de 1 GHz à 100 GHz, à travers le système de revêtement,
- présente un indice flop de 5 ou plus, lequel indice flop est égal à 2,69$(L_1 - L_3)^{1,11}/(L_2)^{0,86}$, étant entendu que

$L_1$ est la valeur de l'indice L* CIELAB mesurée à 15° au moyen d'un spectrophotomètre multi-angle avec l'illuminant D65 et un champ observateur de 10°,

$L_2$ est la valeur de l'indice L* CIELAB mesurée à 45° au moyen d'un spectrophotomètre multi-angle avec l'illuminant D65 et un champ observateur de 10°,

et $L_3$ est la valeur de l'indice L* CIELAB mesurée à 110° au moyen d'un spectrophotomètre multi-angle avec l'illuminant D65 et un champ observateur de 10°,

- et présente un ΔE CIELAB de 4 ou moins, en comparaison d'un système de revêtement assorti en couleur, valeur mesurée à 110° au moyen d'un spectrophotomètre multi-angle avec l'illuminant D65 et un champ observateur de 10°.

2. Composition de revêtement conforme à la revendication 1, dans laquelle la composition de pigment comprend, par rapport au poids total de la composition de pigment, de 5 % à 45 % en poids de paillettes d'aluminium, ou 2 % ou moins de paillettes d'aluminium.

3. Composition de revêtement conforme à l'une des revendications 1 et 2, dans laquelle le système de revêtement transmet 80 % ou plus d'un rayonnement électromagnétique comprenant une fréquence de 1 GHz à 100 GHz, à travers le système de revêtement,
et dans laquelle le système de revêtement présente un ΔE CIELAB de 15 ou moins, en comparaison d'un système de revêtement assorti en couleur, valeur mesurée à 15° au moyen d'un spectrophotomètre multi-angle avec l'illuminant D65 et un champ observateur de 10°.

4. Composition de revêtement conforme à l'une des revendications 1 à 3, dans laquelle la composition de pigment comprend des particules dont la taille moyenne vaut de 1 μm à 100 μm.

5. Couche de revêtement formée par une composition de revêtement conforme à l'une des revendications 1 à 4.

6. Couche de revêtement conforme à la revendication 5, laquelle couche de revêtement comprend un film sec épais de 5 μm à 100 μm.

7. Système de revêtement comprenant une couche de revêtement conforme à l'une des revendications 5 et 6, appliquée sur un substrat transmetteur radar.

8. Système de revêtement conforme à la revendication 7, qui comporte en outre une couche de primaire appliquée sur le substrat, étant entendu que la valeur de l'indice L* CIELAB de cette couche de primaire appliquée sur le substrat, mesurée à 45° au moyen d'un spectrophotomètre à sphère intégrante avec l'illuminant D65, un champ observateur de 10° et un composant spéculaire inclus, se situe dans l'intervalle allant de 30 à 40.

9. Système de revêtement conforme à l'une des revendications 7 et 8, dans lequel le substrat comprend au moins une partie d'un composant de véhicule, lequel composant de véhicule comprend de préférence un système radar.

10. Système de revêtement conforme à l'une des revendications 7 à 9, lequel système de revêtement présente un taux de couverture surfacique des pigments à paillettes présents dans la couche de revêtement de 30 % à 99 %, et de préférence de 50 % à 99 %, par rapport à la couverture surfacique totale de la couche de revêtement.

11. Procédé de fabrication d'un système de revêtement conforme à l'une des revendication 7 à 10, lequel procédé comporte :

- le fait de combiner la résine filmogène et la composition de pigment à paillettes, pour en faire une composition de revêtement,
- et le fait d'appliquer cette composition de revêtement et de la faire durcir, pour former une couche de revêtement.

12. Procédé conforme à la revendication 11, qui comporte en outre :

- le fait d'appliquer une composition de couche de dessus par-dessus la couche de revêtement, après la formation de la couche de revêtement,
- et/ou le fait d'appliquer la composition de revêtement sur un substrat et de faire durcir la composition de revêtement sur ce substrat,

- ou le fait d'appliquer la composition de revêtement sur une surface, le fait de faire durcir la composition de revêtement, pour former un film sur cette surface,

le fait de retirer le film de la surface, pour obtenir un film préformé, et le fait d'appliquer ce film préformé sur un substrat.

13. Procédé de fabrication d'une composition de revêtement conforme à l'une des revendications 1 à 4, lequel procédé comporte le fait de combiner la résine filmogène et la composition de pigment à paillettes, pour en faire une composition de revêtement.

14. Composition de revêtement conforme à l'une des revendications 1 à 4, comprenant :

de 0,065 % à 11 % en poids de paillettes d'aluminium, par rapport au poids total de la composition de pigment, et/ou avec laquelle, quand la composition de revêtement est appliquée sur un substrat en polyoléfine thermoplastique et durcie, donnant un film sec épais de 12,7 $\mu$m, pour former une couche de revêtement, le taux de couverture surfacique des pigments à paillettes présents dans la couche de revêtement vaut de 30 % à 99 %, et de préférence de 50 % à 99 %, par rapport à la couverture surfacique totale de la couche de revêtement.

15. Utilisation d'une composition, conforme à l'une des revendications 1 à 4, pour former un système de revêtement

- qui transmet 70 % ou plus d'un rayonnement électromagnétique comprenant une fréquence de 1 GHz à 100 GHz, à travers le système de revêtement,
- et qui présente un indice flop de 2 ou plus, lequel indice flop est égal à $2,69(L_1 - L_3)^{1,11}/(L_2)^{0,86}$, étant entendu que

$L_1$ est la valeur de l'indice L* CIELAB mesurée à 15° au moyen d'un spectrophotomètre multi-angle avec l'illuminant D65 et un champ observateur de 10°,
$L_2$ est la valeur de l'indice L* CIELAB mesurée à 45° au moyen d'un spectrophotomètre multi-angle avec l'illuminant D65 et un champ observateur de 10°,
et $L_3$ est la valeur de l'indice L* CIELAB mesurée à 110° au moyen d'un spectrophotomètre multi-angle avec l'illuminant D65 et un champ observateur de 10°,

- et présente un $\Delta$E CIELAB de 4 ou moins, en comparaison d'un système de revêtement assorti en couleur, valeur mesurée à 110° au moyen d'un spectrophotomètre multi-angle avec l'illuminant D65 et un champ observateur de 10°,

quand la composition de revêtement est appliquée sur un substrat en polyoléfine thermoplastique et durcie, donnant un film sec épais de 20 $\mu$m.

108

104

106

102

112b

100

112a

110

112c

Figure

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 53665519
- WO 2017127708 A1
- US 20100047620 A1
- DE 102005061684 A1
- WO 0015351 A1
- US 6894086 B, Munro
- US 8133938 B, Munro
- US 6299979 B, Neubauer
- US 8999054 B
- US 5212273 A
- CN 201811630188, Zhong-min

**Non-patent literature cited in the description**

- **C. S. MCCAMY.** Observation and Measurement of the Appearance of Metallic Materials - Part 1- Macro Appearance. *Color Research And Application,* August 1996, vol. 21 (4), 292-304